(19) Europäisches Patentamt / European Patent Office / Office européen des brevets

(11) **EP 4 501 451 A1**

(12) **EUROPEAN PATENT APPLICATION**
published in accordance with Art. 153(4) EPC

(43) Date of publication:
05.02.2025 Bulletin 2025/06

(21) Application number: 22935925.2

(22) Date of filing: 29.12.2022

(51) International Patent Classification (IPC):
$B01J\ 35/00\ ^{(2024.01)}$     $B01J\ 35/10\ ^{(2006.01)}$
$B01J\ 23/52\ ^{(2006.01)}$     $B01D\ 53/86\ ^{(2006.01)}$

(52) Cooperative Patent Classification (CPC):
B01D 53/86; B01J 23/52; B01J 35/60; B01J 35/70;
B01J 2235/00

(86) International application number:
PCT/KR2022/021667

(87) International publication number:
WO 2023/191257 (05.10.2023 Gazette 2023/40)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.03.2022 KR 20220038328
28.12.2022 KR 20220187416

(71) Applicant: Quantum Cat Co., Ltd.
Daejeon 34028 (KR)

(72) Inventors:
• KANG, Shinhyun
  Sejong 30130 (KR)
• LIM, Sunghwan
  Sejong 30123 (KR)

(74) Representative: Sonnenhauser, Thomas Martin
Wuesthoff & Wuesthoff
Patentanwälte und Rechtsanwalt PartG mbB
Schweigerstraße 2
81541 München (DE)

(54) **COMPOSITE CATALYST COMPRISING GOLD NANOPARTICLES IMPREGNATED IN POROUS SUPPORT**

(57) The present invention relates to a composite catalyst, and to a composite catalyst comprising: a porous support comprising mesopores; and gold nanoparticles impregnated in the pores of the porous support, wherein the radial distribution function obtained by Fourier transform of an extended X-ray absorption fine structure (EXAFS) spectrum satisfies the following relation 1. [Relation 1] (DH2/DH1) < 0.3 In relation 1, DH1 is the height of the peak at interatomic distance D1, DH2 is the height of the peak at interatomic distance D2, and D1 and D2 satisfy the following relations 2 and 3. [Relation 2] $0.8 \leq$ (D1/D3)$\leq$0.95 [Relation 3] $0.6 \leq$ (D2/D3) $\leq 0.7$ In relations 2 and 3, D3 means the interatomic distance of an Au-Au bond in the bulk phase, which is present at 2.8-3.0 Å.

FIG. 6

## Description

Technical Field

The present disclosure relates to a composite catalyst comprising gold nanoparticles incorporated in a porous support, and to a composite catalyst having significantly excellent catalytic activity at room temperature and capable of rapidly converting substantially all of a reactant gas contained in gas flowing at high velocity at room temperature into a product gas.

Background Art

Transition metal nanoparticles may exhibit catalytic activity due to their high specific surface area, but transition metal nanoparticles supported on a support have the problem that aggregation and sintering occur over a long period of time, which reduces the specific surface area of the transition metal nanoparticles and gradually reduces the catalytic activity. Accordingly, research has been attempted to incorporate nanoparticles into the pores of metal oxide supports, but similarly, the problem of desorption phenomenon of nanoparticles from the surface of the pores and agglomeration and sintering phenomenon of nanoparticles when exposed to high temperature conditions for a long time did not resolve, resulting in a decrease in catalytic activity.

Since transition metal nanoparticles usually have an average particle size of 20 nm or less as primary particles, mesoporous supports with pore sizes of 2-50 nm are considered desirable for supporting these nanoparticles. The mesoporous support may be formed of metal oxide materials, and silica, aluminosilicate, titania or the like is commonly known. Depending on the manufacturing method, mesopores of various sizes and shapes may be formed, and by controlling the content of the metal or metalloid forming the framework, there is also an advantage in that the concentration of acid sites and ion exchange capacity may be controlled. Accordingly, the mesoporous support is used as a carrier for transition metal nanoparticles, and due to the characteristics of the mesopores, the diffusion resistance of the material is lower than that of the microporous support, and thus it may have the advantage of a fast reaction speed.

However, since the mesoporous support carrying the transition metal nanoparticles is also usually operated at a high temperature, Ostwald ripening, particle migration, and coalescence easily occur, making it difficult to maintain the catalytic activity for a long time, and there is a disadvantage in that it is uneconomical and the reaction conditions are not easy. Accordingly, US2019-0255520 A1 discloses a mesoporous silica support supporting gold nanoparticles that has catalytic activity at room temperature, but it has a problem that the catalytic activity is insufficient and the conversion rate is low at high flow rates. In particular, in an air conditioning system where the concentration of impurities should be controlled to a trace amount, the impurities should substantially be removed rapidly, but since the conversion rate is acceptable only at a certain flow rate or lower, the development of a catalyst system with better room temperature catalytic activity is necessary.

[Prior art literature]

[Patent literature]

(Patent literature 1) (Patent literature 1) : US 2019-0255520 A1 (Aug. 22, 2019)
(Patent literature 2) (Patent literature 2) : JP 2014-509927 A (Apr. 24, 2014)

[Non-patent literature]

(Non-patent literature 1) (Non-patent literature 1): Topics in Catalysis 2007, Vol. 44, Nos. 1-2, pp.253-262.

Summary of Invention

Technical Problem

An aspect of the present disclosure is to provide a composite catalyst having remarkably excellent catalytic activity at room temperature. Specifically, it is to provide a composite catalyst capable of rapidly converting substantially all of the reactant gas contained in the gas into product gas by flowing the gas at high velocity at room temperature.

Another aspect of the present disclosure is to provide a composite catalyst capable of rapidly removing substantially all of the harmful gases (impurities) contained in the gas. Specifically, it is to provide a composite catalyst capable of rapidly removing substantially all of the harmful gases (impurities) contained in the gas by flowing the gas containing the harmful gases (impurities) at high velocity at room temperature.

Another aspect of the present disclosure is to provide a composite catalyst having very low gas diffusion resistance, which enables rapid processing of a high-velocity gas with a high conversion rate, and which does not require a high temperature to process a high-velocity gas, thereby providing excellent long-term catalytic activity.

Solution to Problem

According to an aspect of the present disclosure, a composite catalyst includes a porous support including mesopores and gold nanoparticles incorporated in pores of the porous support, wherein a radial distribution function obtained by Fourier transforming an EXAFS (Extended X-ray absorption fine structure) spectrum satisfies the following Formula 1.

$$[\text{Formula 1}]$$

$$(DH2/DH1) < 0.3$$

In the Formula 1, DH1 is a height of a peak at an interatomic distance D1, DH2 is a height of a peak at an interatomic distance D2, and D1 and D2 satisfy the following Formulas 2 and 3, respectively.

$$[\text{Formula 2}]$$

$$0.8 \leq (D1/D3) \leq 0.95$$

$$[\text{Formula 3}]$$

$$0.6 \leq (D2/D3) \leq 0.7$$

In the Formulas 2 and 3, D3 indicates an interatomic distance of a bulk Au-Au bond existing at 2.8 to 3.0 Å.

In an embodiment, the composite catalyst may satisfy the following formula 4.

$$[\text{Formula 4}]$$

$$(DA2/DA1) < 0.25$$

In the formula 4, DA1 is an area of a peak at an interatomic distance D1, DA2 is an area of a peak at an interatomic distance D2, and D1 and D2 satisfy the formula 2 and formula 3, respectively.

In an embodiment, (DH2/DH1) in the formula 1 may be 0.25 or less.

In an embodiment, (DA2/DA1) in the formula 4 may be 0.18 or less.

In an embodiment, a bimodal peak may be provided in an interatomic distance range of 2.2 to 3.0 Å of the radial distribution function obtained by Fourier transforming the EXAFS (Extended X-ray absorption fine structure) spectrum.

In an embodiment, the porous support may be a metal oxide or metalloid oxide porous support.

In an embodiment, a diameter of the nanoparticles may be 1 to 20 nm.

In an embodiment, the composite catalyst may further include macropores.

In an embodiment, the nanoparticles may be incorporated into a portion of the mesopores of the porous support, and the mesopores in which the nanoparticles are not incorporated may be connected to each other as open pores.

In an embodiment, the composite catalyst may be for an oxidation reaction of carbon monoxide, an aldehyde compound, or a hydrocarbon compound.

In an embodiment, the composite catalyst may convert a gas containing carbon monoxide at a concentration of 4% into carbon dioxide at a conversion efficiency of 90% or more under a flow rate condition of 140 ml/min.

According to an aspect of the present disclosure, a method of removing a harmful gas includes an operation of supplying a gas stream containing at least one harmful gas selected from the group consisting of carbon monoxide, aldehyde compounds, and hydrocarbon compounds; and an operation of contacting the composite catalyst described above with the gas stream and oxidizing the harmful gas.

In an embodiment, the oxidizing may be performed at 0°C to 60°C.

In an embodiment, the harmful gas may be removed at a removal rate of 90% or more under a flow rate condition of 140 ml/min by an oxidation reaction.

Advantageous Effects of Invention

The composite catalyst according to the present disclosure may exhibit remarkably excellent catalytic activity at room temperature, and may rapidly convert substantially all of the reactant gas contained in the gas into product gas even when gas is supplied at a high flow rate at room temperature.

In addition, the composite catalyst according to the present disclosure may rapidly remove substantially all of the harmful gases (impurities) contained in the gas, and may substantially remove substantially all of the harmful gases (impurities) contained in the gas even when gas containing the harmful gases (impurities) is supplied at a high flow rate at room temperature.

In addition, the composite catalyst according to the present disclosure has very low gas diffusion resistance, and may thus rapidly process a gas at a high flow rate with a high conversion rate, and does not require a high temperature to process a gas at a high flow rate, and thus, it has the advantage of very excellent long-term catalytic activity.

Brief Description of Drawings

FIGS. 1 to 5 illustrate radial distribution functions obtained by Fourier transforming the EXAFS (Extended X-ray absorption fine structure) spectrum of the composite catalyst according to the present disclosure.

FIG. 6 illustrates a conversion rate of carbon monoxide (CO) contained in a gas into carbon dioxide ($CO_2$) as the gas containing carbon monoxide (CO) is supplied to the composite catalyst according to the present disclosure at different flow rates.

Best Mode for Invention

Unless otherwise defined, the technical and scientific terms used in this specification have the meaning commonly understood by a person of ordinary skill in the art to which this invention belongs, and the description of well-known functions and configurations that may unnecessarily obscure the gist of the present disclosure in the following description and the attached drawings are omitted.

In addition, the singular form used in this specification may be intended to include the plural form unless specifically indicated in the context.

In addition, the units used in this specification without special mention are based on weight, and for example, the unit of % or ratio means weight% or weight ratio, and weight% means the weight% that one component of the entire composition occupies in the composition unless otherwise defined.

In addition, the numerical range used in this specification includes the lower limit and the upper limit and all values within that range, the increment logically derived from the shape and width of the defined range, all values that are double-limited, and all possible combinations of the upper and lower limits of the numerical ranges that are defined in different shapes. Unless otherwise specifically defined in the specification of the present disclosure, values outside the numerical range that may occur due to experimental errors or rounding of values are also included in the defined numerical range.

The term "include" in this specification is an open description that has the equivalent meaning of "comprises," "contains," "has," "characterizes," or the like and does not exclude elements, materials, or processes that are not additionally listed.

The inventor of the present disclosure first invented mesoporous silica containing gold nanoparticles that have catalytic activity at room temperature, but the catalytic activity was insufficient, resulting in a low conversion rate at high flow rates. In particular, in an air conditioning system where the concentration of impurities should be controlled to a trace amount, impurities cannot be removed quickly to an acceptable level, and thus research has been intensified to develop a composite catalyst with significantly superior catalytic activity. The inventor of the present disclosure have discovered that the catalytic activity is significantly improved depending on the correlation between the manufacturing process conditions and the radial distribution function in the operation of complexing gold nanoparticles and a porous support, and have completed the present disclosure.

The composite catalyst according to the present disclosure comprises a porous support including mesopores and gold nanoparticles incorporated in the pores of the porous support, and is characterized in that a radial distribution function obtained by Fourier transforming an EXAFS (Extended X-ray absorption fine structure) spectrum satisfies the following Formula 1.

[Formula 1]

(DH2/DH1)<0.3

In the above formula 1, DH1 is the height of the peak at the interatomic distance D1, DH2 is the height of the peak at the interatomic distance D2, and D1 and D2 satisfy formulas 2 and 3 below, respectively. Specifically, the D1 and D2 are the interatomic distances of the maximum peak found in the range satisfying formulas 2 and 3 below, respectively.

[Formula 2]

0.8≤(D1/D3)≤0.95

[Formula 3]

0.6≤(D2/D3)≤0.7

In the above formulas 2 and 3, D3 refers to the interatomic distance of the bulk Au-Au bond existing at 2.8 to 3.0 Å, and specifically, may exist at 2.88 to 2.98 Å, and more specifically, may refer to the standard interatomic distance of 2.90 Å. Specifically, D3 may refer to the interatomic distance of the bulk Au-Au bond existing at 2.8 to 3.0 Å, obtained through peak deconvolution when the peak appears as one peak with asymmetry or has a bimodal peak. The above asymmetry means that although the peak has the shape of a single peak (unimodal peak), the left and right sides have asymmetry based on the center of the peak as two peaks overlap.

Specifically, (D1/D3) of the above formula 2 may be 0.85 to 0.92, and (D2/D3) of the above formula 3 may be 0.63 to 0.66.

According to a detailed implementation example, in the above formula 1, DH1 may be the height of the peak with an interatomic distance of 2.57±0.2Å, and DH2 may mean the height of the peak with an interatomic distance of 1.85 ±0.2Å. Specifically, DH1 may refer to the height of the peak at the interatomic distance of 2.57+0.1Å, and DH2 may refer to the height of the peak at the interatomic distance of 1.85±0.1Å.

Since the composite catalyst satisfies a height ratio of a peak at the interatomic distance D1 and a peak at the interatomic distance D2, being less than 0.3, the catalytic activity may be significantly improved.

EXAFS stands for extended X-ray absorption fine structure, and may analyze the radial distribution or coordination number of gold nanoparticles. For example, when high-energy X-rays are irradiated on gold atoms, the gold atoms contained in the gold nanoparticles emit electrons. Accordingly, a radial scattering wave is generated centered on the gold atoms that absorbed the X-rays, and when the electrons emitted from the gold atoms that absorbed the X-rays reach other adjacent atoms (gold or oxygen atoms), electrons are emitted from other adjacent atoms. At this time, radial scattered waves are generated centered on other adjacent atoms.

The scattered waves generated centered on the gold atom that absorbed the X-rays and the scattered waves generated centered on other adjacent atoms (gold or oxygen atoms) interfere. At this time, a standing wave is obtained according to the distance between the gold atom that absorbed the X-rays and other atoms (gold or oxygen atoms) adjacent to the gold atom. When the standing wave is Fourier transformed, a radial distribution having a peak according to the distance between the gold atom and other atoms (gold or oxygen atoms) adjacent to the gold atom is obtained. For example, in addition to the peak according to the distance between gold (Au) atoms and gold (Au) atoms, a radial distribution having a peak according to the distance between gold (Au) atoms-oxygen atoms having an Au-O bond when the gold (Au) atom has a bond with an oxygen atom may be obtained.

According to a detailed example, (DH2/DH1) of the above formula 1 may be 0.25 or less, more specifically 0.24 or less, and may be non-limitingly 0 or more. With the above numerical range, the catalytic activity of the composite catalyst is significantly improved, which is preferable in that the reactant gas contained in the gas stream may be substantially all rapidly converted into the product gas even in a high-velocity gas stream.

According to a detailed example, the composite catalyst may have a radial distribution function obtained by Fourier transforming an EXAFS (Extended X-ray absorption fine structure) spectrum, which satisfies the following formula 4.

[Formula 4]

$$(DA2/DA1) < 0.25$$

In the above formula 4, DA1 is the area of the peak at the interatomic distance D1, DA2 is the area of the peak at the interatomic distance D2, and D1 and D2 satisfy the above formulas 2 and 3, respectively.

According to a detailed implementation example, in the above formula 4, DA1 may mean the area of the peak at the interatomic distance $2.57 \pm 0.2$Å, and DA2 may mean the area of the peak at the interatomic distance $1.85 \pm 0.2$Å. Specifically, DA1 may mean the area of the peak at the interatomic distance $2.57 \pm 0.1$ Å, and DA2 may mean the area of the peak at the interatomic distance $1.8510.1$ Å.

Since the above composite catalyst satisfies the area ratio of the peak at the interatomic distance D1 and the interatomic distance D2 being less than 0.25, the catalytic activity may be significantly improved.

According to a detailed example, (DA2/DA1) of the above Formula 4 may be 0.2 or less, specifically 0.18 or less, more specifically 0.15 or less, and may be non-limitingly 0 or more. In the above numerical range, the catalytic activity is significantly improved, which is preferable in that the reactant gas contained in the gas stream may be substantially all rapidly converted into the product gas even in a high-velocity gas stream.

According to a detailed example, a bimodal peak may be provided in the interatomic distance range of 2.2 to 3.0 Å of a radial distribution function obtained by Fourier transforming the EXAFS (Extended X-ray absorption fine structure) spectrum, and the bimodal peak appears due to the gold (Au)-gold (Au) interatomic bond. Specifically, the above-mentioned interatomic distance range of 2.2 to 3.0Å may be a range where the distance between gold (Au) atoms and gold (Au) atoms is located, and refers to the distribution of the interatomic distance of Au-Au in the crystal lattice.

In the above-mentioned interatomic distance range of 2.2 to 3.0Å, typical gold nanoparticles may exhibit a single peak, and having a single peak means that the interatomic distance between gold (Au) and gold (Au) atoms is constant within the crystal lattice of the nanoparticle. However, having a bimodal peak may mean that different interatomic distances between gold (Au) and gold (Au) atoms exist within the crystal lattice, and although it has not been clearly identified, it is inferred that two different interatomic distances between gold (Au) and gold (Au) atoms are generated by deformation of the crystal lattice due to compressive stress. Since it has a bimodal peak in the range of 2.2 to 3.0Å between the above-mentioned atomic distances, it may exhibit excellent catalytic activity even in a low-temperature area, and is preferable in that it may substantially completely convert the reactant gas contained in a high-velocity gas stream into a product gas very quickly.

According to a detailed example, the porous support may be a metal oxide or metalloid oxide porous support. The metal or metalloid of the metal oxide or metalloid oxide may be a metal or metalloid of Group 2 to Group 5, Group 7 to Group 9, and Group 11 to Group 14, and specifically, may be a metal or metalloid selected from Groups 2 to 4, and Group 13 and Group 14, and more specifically, may be Al, Ti, Zr, or Si.

The porous support includes mesopores, and optionally may further include micropores. In the present disclosure, micropores mean that the average diameter of internal pores is less than 2 nm, and mesopores mean that the average diameter of internal pores is 2 nm to 50 nm. The volume of the mesopores of the above porous support may be 50% by volume or more, 60% by volume or more, or 70% by volume or more, and the upper limit is not limited, but for example, may be 100% by volume or less, 95% by volume or less, or 90% by volume or less, or may be 50 to 100% by volume, specifically 60 to 90% by volume, but this is only an example and is not limited thereto.

According to a non-limiting detailed example, the porous support may have a hierarchical porous structure, and may include a structure in which micropores are regularly present and interconnected between the mesopores.

According to a non-limiting detailed example, the porous support may further include macropores, and it may be desirable to include macropores in a certain volume fraction or more, which may significantly reduce the gas diffusion resistance.

The gold nanoparticles may be manufactured by a method known in the art or may use commercially available materials. Specifically, the gold nanoparticles may be manufactured by reducing a gold precursor present in a solution to gold according to a known method (Natan et al., Anal. Chem. 67, 735 (1995)). Examples of the gold precursor include, but are not limited to, a gold-containing halide, nitrate, acetate, acetylacetonate, ammonium salt, or the like. Specifically, the gold precursor may be $HAuCl_4$ or $HAuBr_4$, but is not limited thereto.

The diameter of the gold nanoparticles may be 1 to 20 nm, specifically 1 to 15 nm, more specifically 1 to 12 nm. The diameter of the preferred gold nanoparticles may be 1 to 10 nm, more preferably 1 to 8 nm.

According to an embodiment, the average diameter of the nanoparticles may be larger than the average diameter of the mesopores of the porous support. Accordingly, it is possible to generate a deformation of the crystal lattice of the gold nanoparticles incorporated into the mesopores of the porous support, and to induce improvement of the catalytic activity in the room temperature range.

According to an embodiment, the nanoparticles may be incorporated into all of the mesopores of the porous support or may be incorporated into some of the mesopores of the porous support, and specifically, may be incorporated into some of the mesopores of the porous support. More specifically, the nanoparticles may be irregularly incorporated into some of the mesopores of the porous support. At this time, the structure in which they are incorporated in all of the mesopores of the porous support means a superlattice structure, and specifically means a highly ordered superlattice structure having a face-centered cubic (FCC) symmetry. The form in which the nanoparticles are irregularly incorporated in some of the mesopores has the advantage that gas diffusion may be more effective than the superlattice structure.

According to an embodiment, the nanoparticles are incorporated in some of the mesopores of the porous support, and the mesopores in which the nanoparticles are not incorporated may be connected to each other as open pores. Since the composite catalyst has the nanoparticles incorporated only in some of the pores of the porous support, the diffusion of harmful gases may be more effective through the pores in which the nanoparticles are not incorporated and are connected to each other as open pores. Accordingly, even if gas is supplied at a high flow rate at room temperature, substantially all of the reactant gas contained in the gas may be rapidly converted into product gas.

According to an embodiment, the composite catalyst may have an average particle size of 0.01 $\mu$m to 10 pm, specifically 0.05 $\mu$m to 5 $\mu$m, and more specifically 0.1 $\mu$m to 5 pm, but is not limited thereto.

According to a detailed example, the composite catalyst may be used for the oxidation reaction of carbon monoxide, an aldehyde compound, or a hydrocarbon compound. Accordingly, the composite catalyst according to the present disclosure may be preferably utilized as a solid-phase oxidizing agent for carbon monoxide, an aldehyde compound, or a hydrocarbon compound. The aldehyde compound may be acetaldehyde or formaldehyde, but is not limited thereto. The hydrocarbon compound may be an aliphatic or aromatic compound, or a volatile organic compound (VOC), and examples thereof may include methane, ethane, propane, butane, benzene, toluene, or xylene, but are not limited thereto.

According to a detailed example, the composite catalyst may convert a carbon monoxide-containing gas having a concentration of 4% into carbon dioxide at room temperature at a conversion efficiency of 80% or more, specifically 85% or more, and more specifically 90% or more, under a flow rate condition of 140 ml/min. The carbon monoxide-containing gas may contain oxygen at a certain content, for example, 2% or more, 4% or more, 10% or more, non-limitingly 30% or less, in order to be oxidized. For example, the gas containing carbon monoxide may be air, but is not limited thereto as long as it contains oxygen at a certain content or more.

The present disclosure provides a method of removing a harmful gas, including: an operation of supplying a gas stream containing at least one harmful gas selected from the group consisting of carbon monoxide, an aldehyde-based compound, and a hydrocarbon-based compound; and an operation of contacting the gas stream with a composite catalyst according to any one of claims 1 to 11 to oxidize the harmful gas. The method of removing a harmful gas may more effectively cause an oxidation reaction in a gas stream at a high flow rate at room temperature by using a composite catalyst exhibiting remarkably excellent catalytic activity as described above.

According to a detailed example, the oxidation operation may be performed at 0°C to 60°C, specifically at 10°C to 50 °C, more specifically at 20°C to 40°C, but is not limited thereto.

According to a detailed example, the harmful gas may be removed by the oxidation reaction at a removal rate of 80% or more, specifically 85% or more, more specifically 90% or more under a flow rate condition of 140 ml/min. Specifically, the harmful gas may be removed at a removal rate within the range described above in the above-described temperature range.

According to a detailed example, the harmful gas may be removed by an oxidation reaction at a removal rate of 80% or more, specifically 85% or more, more specifically 90% or more, and even more specifically 95% or more under a flow rate condition of 160 ml/min. Specifically, the harmful gas may be removed at a removal rate within the range described above in the above-described temperature range.

Mode for Invention

Hereinafter, the present disclosure will be described in more detail using examples, but the examples below are provided only as examples to help understand the present disclosure, and the content of the present disclosure is not limited to the examples below.

(Example 1) Preparation of composite catalyst 1

[Operation 1]: Preparation of gold nanoparticles functionalized with a polymer

[Operation 1-1]: Gold nanoparticles stabilized with oleylamine are synthesized according to the following procedure.

First, olein amine was selected as a stabilizer, and a solution composed of 60 ml of tetralin, 60 ml of olein amine, and 0.6 g of HAuC1.H$_2$O was prepared by stirring at room temperature for 10 minutes. 6 mmol of TBAB (tetrabutylammonium bromide), 6ml of tetralin, and 6 ml of olein amine were mixed by ultrasonic grinding, and then quickly added to the solution. And the above solution was stirred at room temperature for 1 hour more, ethanol was added, and then centrifuged to precipitate gold nanoparticles. The gold nanoparticle precipitate was redispersed with hexane, and ethanol was added and centrifuged. The manufactured gold nanoparticles showed an average particle diameter of 4 nm, and the manufactured gold nanoparticles were dispersed in 100 ml of toluene as formed as is.

[Operation 1-2]: The surface of the gold nanoparticles was functionalized with thiolated PEG using the following method.

In the above operation 1-1, the gold nanoparticles dispersed in toluene were diluted additionally with 100 ml of tetrahydrofuran, and a thiolated polymer was selected to functionalize the surface of the gold nanoparticles by binding the polymer, and 1 g of monofunctional polyethylene glycol (aSH-PEG, weight average molecular weight: lkDa) substituted with a thiol group at the terminal was added. After stirring, hexane was added, and centrifugation was performed to precipitate the gold nanoparticles (4-Au-PEG) functionalized with PEG. The 4-Au-PEG obtained by precipitation was dried and dispersed in water.

[Operation 2]: Preparation of porous silica encapsulating PEG-functionalized gold nanoparticles

0.088 g of 4-Au-PEG prepared in the above operation 1-2 was mixed with 0.396 g of Plutonic F127 as an activator and uniformly dispersed in a 1.6M HC1 aqueous solution of 10ml, and then 1.49 g of tetraethyl orthosilicate (TEOS) was added to the dispersion solution. Then, the dispersion of the mixture was stirred for 15 minutes and maintained at room temperature for 40 hours without stirring to prepare a red precipitate. The red precipitate thus formed corresponds to the porous silica encapsulating PEG-functionalized gold nanoparticles.

[Operation 3]: Preparation of composite catalyst

After washing the red precipitate prepared in the previous operation with water and drying it, it was calcined stepwise at 250°C for 3 hours, 400°C for 2 hours, and 500°C for 2 hours to remove PEG and Pluronic F127 polymers, thereby preparing a composite catalyst 1, which is a porous silica with gold nanoparticles captured.

(Example 2) Preparation of composite catalyst 2

Except that the molar ratio of oleinamine and HAuC1.H$_2$O in operation 1-1 of the above Example 1 was adjusted to prepare gold nanoparticles having an average particle size of 10 nm, the same operations were performed to prepare a composite catalyst 2, which is a porous silica with gold nanoparticles captured.

(Example 3) Preparation of composite catalyst 3

Composite catalyst 3 was prepared by performing operations 1 and 3 in the same manner, except that operation 2 of Example 1 was performed as follows.

In order to prepare porous alumina in which PEG-functionalized gold nanoparticles were captured in operation 2, 0.15 g of PEG-functionalized gold nanoparticles (4-Au-PEG) and 0.675 g of Pluronic F127 were first prepared, and uniformly dispersed in a mixed solution of 0.8 ml of nitric acid (68%) and 40 ml of ethanol, and then 0.81 g of aluminum ethoxide was added to the dispersion. Then, the dispersion of the mixture was stirred for 3 hours, maintained at room temperature without stirring for 24 hours, and then dried at 60 °C for 3 hours to prepare a red solid. After that, operation 3 of Example 1 was performed in the same manner to prepare a composite catalyst 3, which is a porous alumina having gold nanoparticles captured therein.

(Example 4) Preparation of composite catalyst 4

Operations 1 and 3 were performed in the same manner, except that operation 2 of Example 1 was performed as follows, to prepare a composite catalyst 4.

For the preparation of porous titania having PEG-functionalized gold nanoparticles captured therein in operation 2, 0.10 g of PEG-functionalized gold nanoparticles (4-Au-PEG) and 0.44 g of Pluronic F127 were first prepared, and uniformly dispersed in a mixed solution of 0.68 ml of 37% hydrochloric acid and 17.05 ml of ethanol, and then 2.28 g of titanium tetraisopropoxide was added to the dispersion. Then, the dispersion of the above mixture was stirred for 3 hours, maintained at room temperature without stirring for 24 hours, and then dried at a temperature of 60°C for 3 hours to produce a red solid. Thereafter, operation 3 of Example 1 was performed in the same manner to produce a composite catalyst 4, which is porous titania with gold nanoparticles captured therein.

(Comparative Example 1)

The same operations 1 and 2 were performed except that the molar ratio of oleinamine and HAuC1.$H_2$O in operation 1-1 of Example 1 was adjusted to produce gold nanoparticles having an average particle diameter of 12 nm. In operation 3, the red precipitate produced in the previous operation was washed with water, dried, and then calcined at 450°C to remove PEG and Pluronic F127 polymers, thereby producing a composite catalyst 5, which is porous silica with gold nanoparticles captured therein.

(Comparative Example 2)

The same operations 1 and 2 of the above Example 1 were performed. In operation 3, the red precipitate prepared in the previous operation was washed with water, dried, and then calcined at 450°C to remove PEG and Pluronic F127 polymers, thereby preparing a composite catalyst 6, which is porous silica with gold nanoparticles captured therein.

(Experimental Example 1) EXAFS (Extended X-ray absorption fine structure) analysis

EXAFS (Extended X-ray absorption fine structure) measurement was performed using the 4C and 10C beamlines of the Pohang Accelerator (PLS-II). The EXAFS spectrum was Fourier transformed to obtain the radial distribution function.

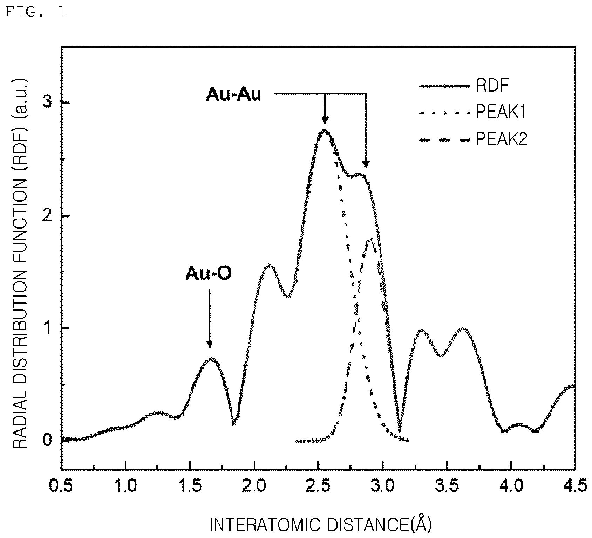

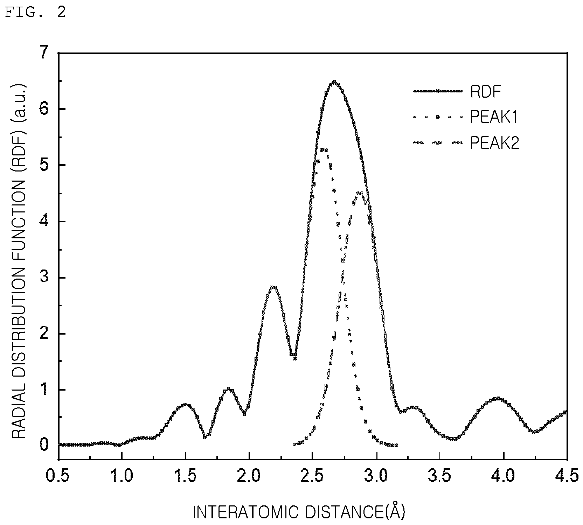

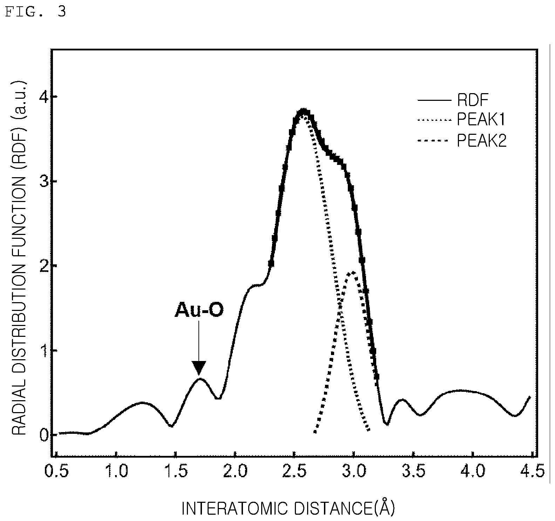

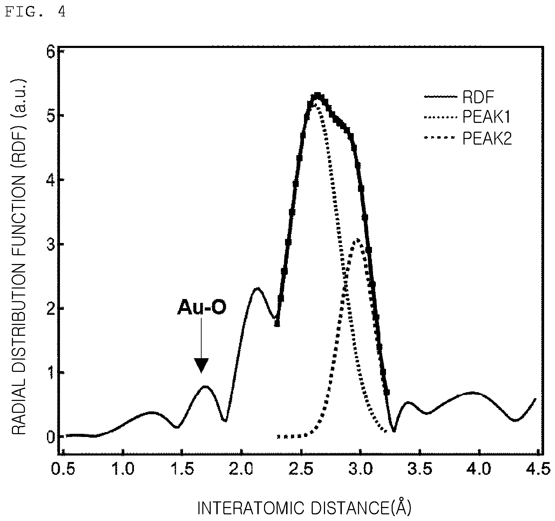

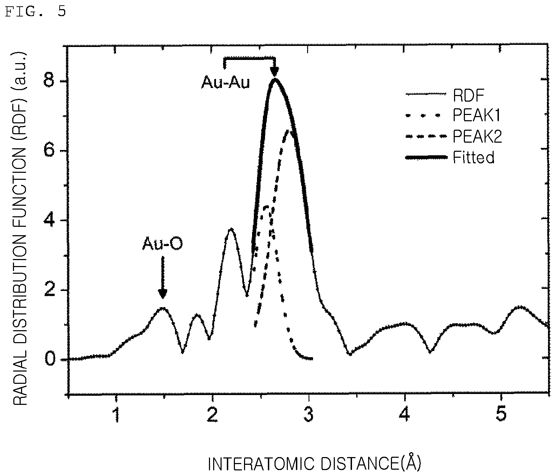

FIG. 1 illustrates the radial distribution function of Example 1, FIG. 2 illustrates that of Example 2, FIG. 3 illustrates that of Example 3, FIG. 4 illustrates that of Example 4, and FIG. 5 illustrates that of Comparative Example 1. Referring to these, in all of FIGS. 1 to 5, a peak due to Au-O bonding was observed in the 1.4 to 1.7 Å section. From this, it may be confirmed that the proximity between the surface of the gold nanoparticle and the porous support capturing the same provides a condition for forming a stable Au-O bond at the interface between the gold nanoparticle and the porous support, thereby forming Au-O-Si, Au-O-Al, or Au-O-Ti.

In addition, in all of FIGS. 1 to 5, a peak due to bulk Au-Au bonding was observed in the 2.8 to 3.0Å section, and when the interatomic distance of this peak is referred to as D3, the peak of the radial distribution function was defined based on D3. Specifically, D1 and D2 are the interatomic distances of maximum peaks found in the range satisfying Formulas 2 and 3 below, respectively, and the positions of D1, D2, and D3 are shown in Table 1. In addition, the ratios of the height (DH1) and area (DA1) of peak of the interatomic distance D1 and the height (DH2) and area (DA2) of peak of the interatomic distance D2 were calculated and shown in Table 1.

$$[Formula\ 2]$$

$$0.8 \leq (D1/D3) \leq 0.95$$

$$[Formula\ 3]$$

$$0.6 \leq (D2/D3) \leq 0.7$$

[Table 1]

|  | Example 1 | Example 2 | Example 3 | Example 4 | Comparative Example 1 |
|---|---|---|---|---|---|
| DH2/DH1 | 0 | 0.227 | 0 | 0 | 0.335 |
| DA2/DA1 | 0 | 0.129 | 0 | 0 | 0.227 |
| D1 | 2.5522Å | 2.5893Å | 2.5607Å | 2.5939Å | 2.567Å |
| D2 | - | 1.8471Å | - | - | 1.848Å |
| D3 | 2.906Å | 2.8967Å | 2.9601Å | 2.9526Å | 2.8177 Å |
| D1/D3 | 0.8783 | 0.894 | 0.8651 | 0.8785 | 0.911 |
| D2/D3 | - | 0.638 | - | - | 0.656 |

(Experimental Example 2) Carbon Monoxide Oxidation Characteristics

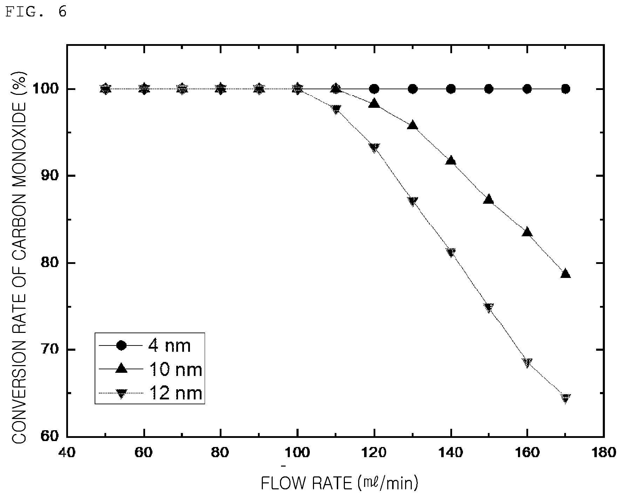

Carbon monoxide (CO) oxidation was performed in a tubular reactor with both sides open. The composite catalyst according to the examples of the present disclosure and the comparative example was installed in the middle of the tubular reactor, carbon monoxide-containing gas was supplied to one side of the reactor, and the other side of the reactor was connected to a Gas Chromatography (DS Science) to measure the carbon monoxide concentration using a TCD detector (Carboxen 1000). The carbon monoxide-containing gas used was 4% of CO, 10% of $O_2$, and 86% of He, and the concentration of carbon monoxide discharged from the other side of the reactor was measured while controlling the supply flow rate at room temperature (25 °C). This measurement was performed using the composite catalyst according to examples 1 and 2, and comparative example 1, and the results are shown in FIG. 6.

Referring to FIG. 6, 4 nm represents Example 1, 10 nm represents Example 2, and 12 nm represents Comparative Example 1. In the case of Example 1, a carbon monoxide conversion rate close to 100% was shown even at a high flow rate, and in the case of Example 2, although the conversion rate was shown to decrease somewhat at a high flow rate, a conversion rate of 90% or more was shown even under the condition of a flow rate of 140 ml/min. In contrast, Comparative Example 1 showed a steep decrease in the conversion rate at a high flow rate, showing a conversion rate of less than 70% under a flow rate condition of 160 ml/min, indicating that it had insufficient catalytic activity at a high flow rate of gas.

As described above, the present disclosure has been described by specific matters and limited examples and drawings, but these are provided only to help a more general understanding of the present disclosure, and the present disclosure is not limited to the above examples, and those skilled in the art to which the present disclosure pertains may make various modifications and variations from this description.

Therefore, the idea of the present disclosure should not be limited to the described embodiments, and not only the scope of the patent claims described below, but also all things that are equivalent or equivalent to the scope of the patent claims are considered to belong to the category of the idea of the present disclosure.

**Claims**

1. A composite catalyst comprising:

   a porous support including mesopores; and
   gold nanoparticles incorporated in pores of the porous support,
   wherein a radial distribution function obtained by Fourier transforming an EXAFS (Extended X-ray absorption fine structure) spectrum satisfies the following Formula 1:

   $$[Formula\ 1]$$

   $$(DH2/DH1) < 0.3,$$

   wherein in the Formula 1, DH1 is a height of a peak at an interatomic distance D1, DH2 is a height of a peak at an interatomic distance D2, and D1 and D2 satisfy the following Formulas 2 and 3, respectively:

   $$[Formula\ 2]$$

   $$0.8 \leq (D1/D3) \leq 0.95,$$

   $$[Formula\ 3]$$

   $$0.6 \leq (D2/D3) \leq 0.7,$$

   wherein in the Formulas 2 and 3, D3 indicates an interatomic distance of a bulk Au-Au bond existing at 2.8 to 3.0 Å.

2. The composite catalyst of claim 1, wherein the composite catalyst satisfies the following formula 4:

[Formula 4]

$$(DA2/DA1) < 0.25,$$

wherein in the formula 4, DA1 is an area of a peak at an interatomic distance D1, DA2 is an area of a peak at an interatomic distance D2, and D1 and D2 satisfy the formula 2 and formula 3, respectively.

3. The composite catalyst of claim 1, wherein (DH2/DH1) in the formula 1 is 0.25 or less.

4. The composite catalyst of claim 2, wherein (DA2/DA1) in the formula 4 is 0.18 or less.

5. The composite catalyst of claim 1, wherein a bimodal peak is provided in an interatomic distance range of 2.2 to 3.0 Å of the radial distribution function obtained by Fourier transforming the EXAFS (Extended X-ray absorption fine structure) spectrum.

6. The composite catalyst of claim 1, wherein the porous support is a metal oxide or metalloid oxide porous support.

7. The composite catalyst of claim 1, wherein a diameter of the nanoparticles is 1 to 20 nm.

8. The composite catalyst of claim 1, wherein the composite catalyst further comprises macropores.

9. The composite catalyst of claim 1, wherein the nanoparticles are incorporated into a portion of the mesopores of the porous support, and the mesopores in which the nanoparticles are not incorporated are connected to each other as open pores.

10. The composite catalyst of claim 1, wherein the composite catalyst is for an oxidation reaction of carbon monoxide, an aldehyde compound, or a hydrocarbon compound.

11. The composite catalyst of claim 10, wherein the composite catalyst converts a gas containing carbon monoxide at a concentration of 4% into carbon dioxide at a conversion efficiency of 90% or more under a flow rate condition of 140 ml/min.

12. A method of removing a harmful gas, comprising:

an operation of supplying a gas stream containing at least one harmful gas selected from the group consisting of carbon monoxide, aldehyde compounds, and hydrocarbon compounds; and
an operation of contacting the composite catalyst according to any one of claims 1 to 11 with the gas stream and oxidizing the harmful gas.

13. The method of removing a harmful gas of claim 12, wherein the oxidizing is performed at 0°C to 60°C.

14. The method of removing a harmful gas of claim 12, wherein the harmful gas is removed at a removal rate of 90% or more under a flow rate condition of 140 ml/min by an oxidation reaction.

FIG. 1

FIG. 2

FIG. 3

FIG. 4

FIG. 5

FIG. 6

## INTERNATIONAL SEARCH REPORT

| International application No. |
|---|
| **PCT/KR2022/021667** |

| A. | CLASSIFICATION OF SUBJECT MATTER |
|---|---|

**B01J 35/00**(2006.01)i; **B01J 35/10**(2006.01)i; **B01J 23/52**(2006.01)i; **B01D 53/86**(2006.01)i

According to International Patent Classification (IPC) or to both national classification and IPC

| B. | FIELDS SEARCHED |
|---|---|

Minimum documentation searched (classification system followed by classification symbols)

B01J 35/00(2006.01); B01D 53/62(2006.01); B01D 53/86(2006.01); B01D 53/94(2006.01); B01J 21/06(2006.01); B01J 23/48(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 다공성 지지체(porous support), 촉매(catalyst), 소성(sintering), 메조기공(meso pore), 일산화탄소(carbon monooxide)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2021-0124485 A (QUANTUM CAT CO., LTD.) 14 October 2021 (2021-10-14)<br>See claims 1-9; paragraphs [0036]-[0125]; example 1; and figure 15. | 1-14 |
| Y | KR 10-2020-0114460 A (KOREA INSTITUTE OF INDUSTRIAL TECHNOLOGY) 07 October 2020 (2020-10-07)<br>See example 1. | 1-14 |
| A | KR 10-2018-0035118 A (KOREA ADVANCED INSTITUTE OF SCIENCE AND TECHNOLOGY) 05 April 2018 (2018-04-05)<br>See entire document. | 1-14 |
| A | WU, B.-H. et al. Solvent effect on the synthesis of monodisperse amine-capped Au nanoparticles. Chinese Chemical Letters. 2013, vol. 24, pp. 457-462.<br>See entire document. | 1-14 |
| A | YANG, D. et al. Influences of sintering temperature on pore morphology, porosity and mechanical behavior of porous Ti. Mater. Res. Express. 19 October 2021, vol. 8, document no. 106519, pp. 1-8.<br>See entire document. | 1-14 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **30 March 2023** | **31 March 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

International application No.

**PCT/KR2022/021667**

| Patent document cited in search report | | | Publication date (day/month/year) | Patent family member(s) | | | Publication date (day/month/year) |
|---|---|---|---|---|---|---|---|
| KR | 10-2021-0124485 | A | 14 October 2021 | CN | 113613786 | A | 05 November 2021 |
| | | | | EP | 3936231 | A1 | 12 January 2022 |
| | | | | EP | 3936231 | A4 | 28 December 2022 |
| | | | | JP | 2022-528253 | A | 09 June 2022 |
| | | | | US | 2022-0016602 | A1 | 20 January 2022 |
| | | | | WO | 2020-197026 | A1 | 01 October 2020 |
| | | | | WO | 2020-197200 | A1 | 01 October 2020 |
| KR | 10-2020-0114460 | A | 07 October 2020 | KR | 10-2320340 | B1 | 02 November 2021 |
| KR | 10-2018-0035118 | A | 05 April 2018 | US | 11565245 | B2 | 31 January 2023 |
| | | | | US | 2019-0255520 | A1 | 22 August 2019 |
| | | | | WO | 2018-062646 | A2 | 05 April 2018 |
| | | | | WO | 2018-062646 | A3 | 02 August 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190255520 A1

- JP 2014509927 A

**Non-patent literature cited in the description**

- *Topics in Catalysis*, 2007, vol. 44 (1-2), 253-262

- **NATAN et al.** *Anal. Chem.*, 1995, vol. 67, 735